**Europäisches Patentamt**

**European Patent Office**

**Office européen des brevets**

(19)

(11) Veröffentlichungsnummer: **0 028 762**
**A1**

(12) # EUROPÄISCHE PATENTANMELDUNG

(21) Anmeldenummer: **80106597.0**

(22) Anmeldetag: **27.10.80**

(51) Int. Cl.³: **B 65 G 47/90**

(30) Priorität: **31.10.79 DE 2944001**

(43) Veröffentlichungstag der Anmeldung:
**20.05.81 Patentblatt 81/20**

(84) Benannte Vertragsstaaten:
**AT BE CH DE FR GB IT LI LU NL SE**

(71) Anmelder: **Staudacher, Horst
Königsberger Strasse 8
D-6551 Bretzenheim(DE)**

(72) Erfinder:
**Der Erfinder hat auf seine Nennung verzichtet**

(54) **Beschickungsmaschine.**

(57) Die Beschickungsmaschine nimmt mehrere Objekte von der zuliefernden Maschine in der jeweiligen Geschwindigkeit auf, hebt sie an und bringt sie auf die Verarbeitungsgeschwindigkeit der zu beschikkenden Maschine und gibt sie an diese weiter. Das geschieht im einzelnen so, daß die Objektaufnahmen (8) von einem Getriebe (4) auf die gleiche Geschwindigkeit gebracht werden, wie die Objekte (1), (2), (3) die einzeln auf dem Zutransporteur (5) geführt werden. Nach Erreichung der Geschwindigkeit werden die Objektaufnahmen auf die Objekte abgesenkt, diese aufgenommen, angehoben, über den Objektabtransporteur (6) bewegt, der Geschwindigkeit des Abtransporteurs angeglichen, abgesenkt und freigegeben.

Die Objektaufnahmen sind so ausgeführt, daß nicht einwandfreie Objekte nicht aufgenommen werden, so daß diese die Weiterverarbeitung nicht stören können. Der Antrieb des Getriebes erfolgt winkelsynchron mit vor- und nachgeordneter Maschine.

EP 0 028 762 A1

Croydon Printing Company Ltd.

- 1 -

## Beschickungsmaschine

Die Erfindung betrifft eine Maschine zur Beschickung von Maschinen mit Objekten, insbesondere bei Verpackungsmaschinen.

Der Zweck derartiger Beschickungsmaschinen besteht darin, die verarbeitende Maschine mit Objekten zu bedienen, die in Zustand und Anordnung dem Standard entsprechen, der zur Weiterverarbeitung erforderlich ist.

Der Stand der Technik besteht zur Zeit darin, daß die Objekte vor der weiterverarbeitenden Maschine auf Transportbändern aneinanderstoßend stauen. Eine Schnecke oder ein Stern bringt die Objekte auf den erforderlichen Abstand. Durch den Staudruck werden Objektbruchstücke aus dem Stau seitlich herausgequetscht.
Alternativ dazu gibt es auch Transportbänder, auf denen die Objekte auf Abstand geführt werden und die Objekte deshalb nicht aneinanderstoßen.
Im "Handbuch der Etikettiertechnik" Verfasser Karl Dullinger, Herausgeber Hermann Kronseder Maschinenfabrik 8402 Neutraubling erschienen September 1975, 1. Auflage Seite 191 - 238 sind die Ausführungen der üblichen Beschickungen und deren Probleme beschrieben. Die oben angeführten Transportbänder, die die Objekte auf Abstand führen sind auf Seite 231 - 233 und 237 abgebildet und "bloc-Conveyor" genannt.

Die Methode mit dem Objektstau und der Schnecke bzw. Stern führt durch das Aneinanderstoßen der Objekte bei mittleren bis größeren Leistungen zu großem Lärmpegel und sehr hohem Verschleiß der verarbeitenden Maschine und der Objekte. Bei Glasobjekten besteht durch Scherben auch ein Verletzungsrisiko für die Bedienung der Maschinen. Die Bruchstücke führen, soweit sie nicht im Stau seitlich herausfallen, auch zu Betriebsunterbrechungen und dadurch zu Leistungseinbußen. Der zu hohe Lärmpegel führt bei sehr hohen Maschinenleistungen zu Gehörschäden.

Im oben angeführten Handbuch wird dieses Problem von Seite 223 - 227 besonders behandelt. Verschlissene Objekte kosten vor allem auch Energie. Die Methode mit dem Transporteur der die Objekte auf Abstand führt beim Übergang von einer Transportform in eine andere Transportform (z.B. 20-reihig und schrittweisem Vorschub auf 1-reihig kontinuierlichem Vorschub) zu erhöhten Stoßbeanspruchungen. Die dabei entstehenden Bruchstücke stören die Weiterverarbeitung ebenso wie die verbleibenden Lücken. Ein erhöhter Maschinenverschleiß ist auch festzustellen.

Der Erfindung liegt die Aufgabe zugrunde Betriebsunterbrechungen, Verschleiß, Lärmpegel und Verletzungsgefahr zu verringern, sowie die Maschinenleistung zu erhöhen.

Die Aufgabe wird erfindungsgemäß dadurch gelöst, daß vor der zu beschickenden Maschine eine Beschickungsmaschine steht. Die Beschickungsmaschine nimmt mehrere Objekte von der zuliefernden Maschine in der jeweiligen Geschwindigkeit auf, hebt sie an und bringt sie auf die Verarbeitungsgeschwindigkeit der zu beschickenden Maschine und gibt sie an diese weiter. Das geschieht im einzelnen so, daß die Objektaufnahmen (8) von einem Getriebe (4) auf die gleiche Geschwindigkeit gebracht werden, wie die Objekte (1) (2) (3) die einzeln auf dem Zutransporteur (5) geführt werden. Nach Erreichung der Geschwindigkeit werden die Objektaufnahmen auf die Objekte abgesenkt, diese aufgenommen, angehoben, über den Objektabtransporteur (6) bewegt, der Geschwindigkeit des Abtransporteurs angeglichen, abgesenkt und freigegeben.

Das Getriebe (4) besteht aus Kettenrädern, auf dänen eine Kette umläuft. Auf dieser Kette ist eine Rolle befestigt, die ihrerseits in den Mitnehmer der Schubstange eingreift. Die Schubstange überträgt die lineare Bewegung auf einen Schlitten, der sich auf 2 Schienen bewegt. Auf diesem Schlitten sind 2 Kurbelwellen übereinander gelagert und werden von einem auf dem Schlitten befestigtem Antrieb 180$^\circ$ in wechselndem Drehsinn geschwenkt. An den Kurbelwellen sind die Objektaufnahmen so befestigt, daß die Kurbelarme parallel und die Objektaufnahmen während der Schwenkung senkrecht bleiben. Die Schwenkbewegung erfolgt quer zur Schlittenbewegung. Die Objektaufnahmen sind so ausgeführt, daß nicht einwandfreie Objekte nicht aufgenommen werden, sodaß diese die Weiterverarbeitung nicht stören können. Der Antrieb des Getriebes erfolgt winkelsynchron mit vor- und nachgeordneter Maschine.

Wenn die Beschickungsmaschine nachträglich zwischen 2 Maschinen gestellt wird, diese verbinden soll und diese verschiedenen Objektverarbeitungsabstand haben, so wird die Beschickungsmaschine so ausgeführt, daß die Objektaufnahmen auf den Kurbelwellen (10) einzeln verschiebbar sind. Untereinander sind die Objektaufnahmen so verbunden, so daß der größere Verarbeitungsabstand beim Auseinanderziehen nicht überschritten und beim Zusammenschieben der kleinere Verarbeitungsabstand nicht unterschritten werden kann. Auf den Kurbelwellen ist ein Antrieb befestigt, der zwischen dem Anheben und Absenken der Objektaufnahmen diese mittels Mutter und Spindel auf den jeweils erforderlichen Abstand bringt.

Durch den synchronen Ablauf ist eine höhere Leistung bei geringerem Lärmpegel und Verschleiß von Objekten und Verarbeitungsmaschinen möglich.

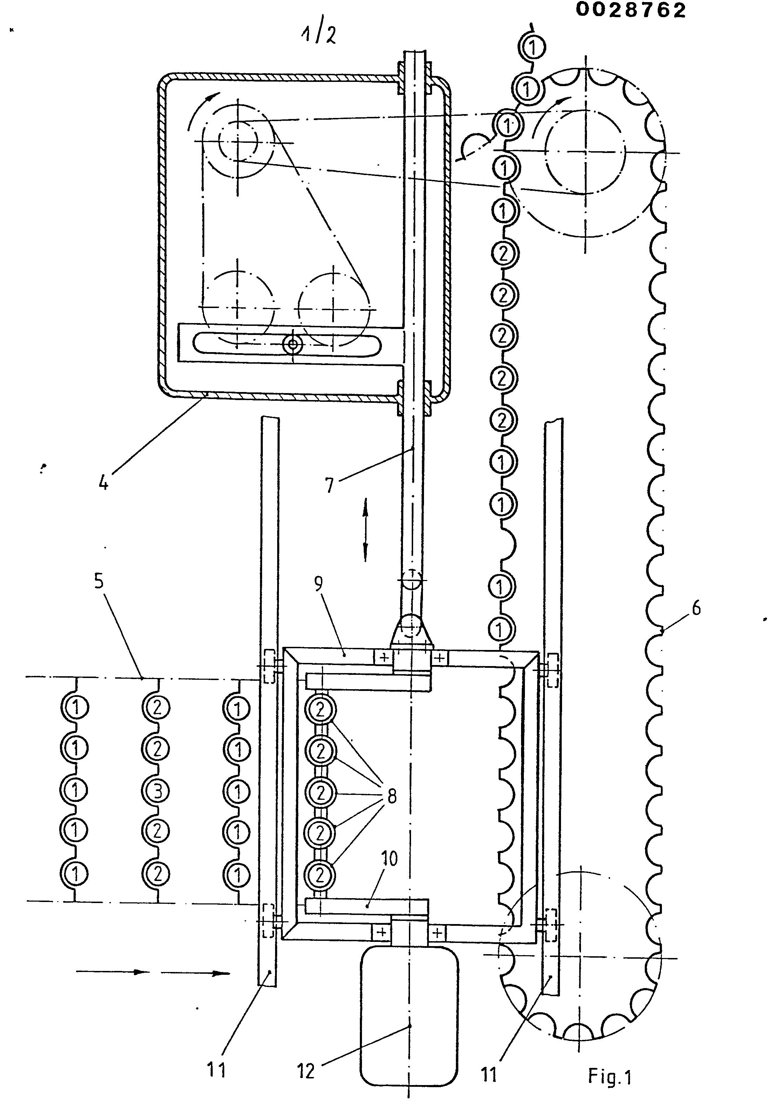

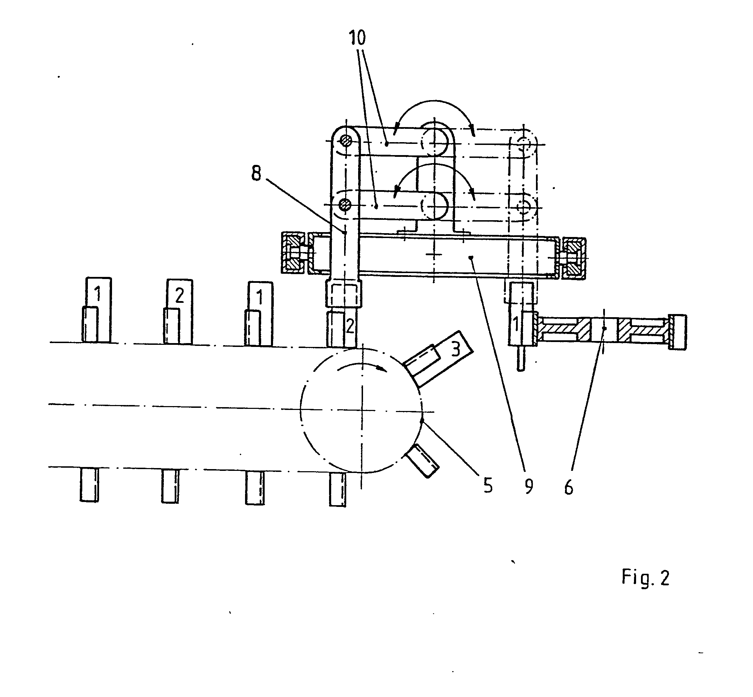

Ein Ausführungsbeispiel der Erfindung ist in der Zeichnung dargestellt und wird im folgenden näher beschrieben.
Es zeigen Fig. 1 die Draufsicht und Fig. 2 die Seitenansicht des Schlittens mit Objektzuführung und Objektabtransport
Die Zahlen bedeuten:
(1), (2) einwandfreie Objekte
(3) nicht einwandfreie Objekte (Bruchstücke usw.)
(4) Getriebe
(5) Objektzuführung
(6) Objektabtransport
(7) Schubstange
(8) Objektaufnahme
(9) Schlitten
(10) Kurbelwellen
(11) Schlittenführung
(12) Kurbelwellenantrieb
Die Pfeile zeigen die Bewegungsrichtungen bzw. Drehsinne an.

- 5 -

Patentansprüche:

1. Maschine zur Beschickung von Maschinen mit Objekten, insbesondere bei Verpackungsmaschinen, dadurch gekennzeichnet, daß die Objektaufnahmen (8) von einem Getriebe (4) auf die gleiche Geschwindigkeit ge - bracht werden, wie die Objekte (1) (2) (3) die einzeln auf dem Zutransporteur (5) geführt werden. Nach Erreichung der Geschwindigkeit werden die Objektaufnahmen auf die Objekte abgesenkt, diese aufgenommen, angehoben, über den Objektabtransporteur (6) bewegt, der Geschwindigkeit des Abtransporteurs angeglichen, abgesenkt und freigegeben.
Das Getriebe (4) besteht aus Kettenrädern, auf denen eine Kette umläuft. Auf dieser Kette ist eine Rolle befestigt, die ihrerseits in den Mitnehmer der Schubstange eingreift. Die Schubstange überträgt die lineare Bewegung auf einen Schlitten, der sich auf 2 Schienen bewegt. Auf diesem Schlitten sind 2 Kurbelwellen übereinander gelagert und werden von einem auf dem Schlitten befestigtem Antrieb 180$^{\circ}$ in wechselndem Drehsinn geschwenkt. An den Kurbelwellen sind die Objektaufnahmen so befestigt, daß die Kurbelarme parallel und die Objektaufnahmen während der Schwenkung senkrecht bleiben. Die Schwenkbewegung erfolgt quer zur Schlittenbewegung.
Die Objektaufnahmen sind so ausgeführt, daß nicht einwandfreie Objekte nicht aufgenommen werden, sodaß diese die Weiterverarbeitung nicht stören können.
Der Antrieb des Getriebes erfolgt winkelsynchron mit vor und nachgeordneter Maschine.

2. Maschine nach Anspruch 1,
dadurch gekennzeichnet, daß die Objektaufnahmen auf den Kurbelwellen (10) einzeln verschiebbar sind. Untereinander sind die Objektaufnahmen so verbunden, so daß der größere Verarbeitungsabstand beim Auseinanderziehen nicht überschritten und beim Zusammen - schieben der kleinere Verarbeitungsabstand nicht unterschritten werden kann. Auf den Kurbelwellen ist ein Antrieb befestigt, der zwischen dem Anheben und Absenken der Objektaufnahmen diese mittels Mutter und Spindel auf den jeweils erforderlichen Abstand bringt.

3. Maschine nach Anspruch 1,
dadurch gekennzeichnet, daß an dem Schlitten ein 2. Schlitten mittels Schubstange und Kupplung gekoppelt ist. Jede Objektaufnahme des 1. Schlittens ist mit einer Leitung mit der entsprechenden Objektaufnahme des 2. Schlittens so verbunden, daß das Fehlen eines Objekts die Kupplung einschaltet und die entsprechende Objektaufnahme aus einem Objektspeicher, in dem die Objekte genau angeordnet bereit - stehen, entnimmt und genau in die gemeldete Lücke stellt.

4. Maschine nach Anspruch 1,
dadurch gekennzeichnet, daß das Getriebe zum Bewegen des Schlittens als Kurvengetriebe ausgebildet ist. Die Kurve dreht sich synchron mit der vor- und nachgeordneten Maschine und wird von einer Rolle abgetastet, die auf einer Schubstange befestigt ist, die, wie in Anspruch 1 den Schlitten bewegt. An diesem Schlitten, der von 2 Schienen geführt wird, sind quer zur Bewegungsrichtung 2 Schienen befestigt, durch die ein Querschlitten geführt wird. Der Querschlitten wird durch ein 2. Kurvengetriebe zwischen Objektaufnahme und Abgabe hin- und herbewegt. An diesem Querschlitten sind vertikale Schienen angebracht, mit denen der Vertikalschlitten, an dem die Objektaufnahmen befestigt sind, beim Absenken und Anheben geführt wird. Abgesenkt wird der Vertikalschlitten durch ein 3. Kurvengetriebe und angehoben durch Federn. Das Absenken geschieht in der Form, daß an die Schubstange Schienen befestigt sind, die die Rollen, die am Vertikalschlitten nach unten drücken.

5. Maschine nach Anspruch 1,
dadurch gekennzeichnet, daß das Getriebe aus einer planen feststehenden Kurve, einer Rolle, einem Gleitstein, einem Antriebsarm, einer Schubstange mit Mitnehmer, einer Antriebswelle und dem Getriebsgehäuse. Im Getriebsgehäuse ist die Kurve befestigt und wird von der die Kurve umlaufenden Rolle abgetastet, die, zusammen mit dem Gleitstein auf dem Antriebsarm gelagert ist. Der Antriebsarm ist auf der Antriebs - welle befestigt, die senkrecht zur Kurve steht, im Getriebsgehäuse gelagert ist und winkelsynchron mit den der Beschickungsmaschine vor- und nachgeord - neten Maschinen angetrieben wird. Der Antriebsarm besteht aus einer Stange an der der Bolzen befestigt ist, auf dem die Rolle und der Gleitstein drehbar gelagert sind, und dem Gehäuse, in dem die Stange längs verschiebbar gelagert ist und der Feder, die Gehäuse und Stange verbindet. Die Rolle wird dadurch, daß sie durch den Antrieb und die Kurve bewegt wird, durch die Kurvenkontur nach außen ge - drückt, das durch die Längsverschiebbarkeit der Stange ermöglicht wird. Zurückgezogen wird die Rolle durch die Feder die Stange und Gehäuse verbindet. Der

- 8 -

Gleitstein, der auf dem selben Bolzen wie die Rolle gelagert ist und deshalb die Bewegung mitmacht, gleitet im Mitnehmer der Schubstange in einer Bewegungsrichtung. In der anderen Bewegungsrichtung wird die Schubstange bewegt, die im Getriebsgehäuse längs verschiebbar gelagert ist. Die Schubstangenbewegung wird zur Schlittenbewegung verwendet.

Fig.1

0028762

Fig. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 623 649 (G.E. ROWE)<br>  * Spalte 11, Zeile 1 bis Spalte 13, Zeile 75; Figuren * | 1,2 |
| | US - A - 3 776 342 (C.W. KULIG)<br>  * Zusammenfassung; Figuren * | 1 |
| | DE - A - 2 030 743 (JAEGER B.)<br>  * Seite 5, Zeile 8 bis Seite 10, Zeile 3 * | 1,4 |
| | FR - A - 1 164 147 (FORMACI MAGNETTI)<br>  * Zusammenfassung; Figuren * | 1,4,5 |
| | GB - A - 1 230 841 (TABLE WARE LIM)<br>  * Das ganze Dokument * | 1-3 |
| A | US - A - 2 677 471 (C. SKINNER) | 1 |

**KLASSIFIKATION DER ANMELDUNG (Int Cl.³)**

B 65 G 47/90

**RECHERCHIERTE SACHGEBIETE (Int Cl.³)**

B 65 G
B 65 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-01-1981 | VAN ROLLEGHEM |

EPA form 1503.1  06.78